**Europäisches Patentamt**

**European Patent Office**

**Office européen des brevets**

(19)

(11) Publication number : **0 507 784 B1**

(12) # EUROPEAN PATENT SPECIFICATION

(45) Date of publication of patent specification :
**19.10.94 Bulletin 94/42**

(51) Int. Cl.⁵ : **E02B 15/04**

(21) Application number : **91900007.5**

(22) Date of filing : **05.12.90**

(86) International application number :
**PCT/CA90/00432**

(87) International publication number :
**WO 91/08347 13.06.91 Gazette 91/13**

(54) **THIN FLEXIBLE SHEET SORPTION MATERIAL FOR THE REMOVAL OF OIL FROM OIL SPILLS.**

(30) Priority : **06.12.89 US 446761**

(43) Date of publication of application :
**14.10.92 Bulletin 92/42**

(45) Publication of the grant of the patent :
**19.10.94 Bulletin 94/42**

(84) Designated Contracting States :
**BE DE FR GB IT NL**

(56) References cited :
**FR-A- 1 534 735**
**FR-A- 2 359 937**
**US-A- 3 679 058**
**US-A- 4 028 750**
**US-A- 4 049 554**
**US-A- 4 137 575**

(73) Proprietor : **HERKENBERG, Wolf**
**37 Morningdew Road**
**West Hill**
**Scarborough Ontario M1E 3X2 (CA)**

(72) Inventor : **HERKENBERG, Wolf**
**37 Morningdew Road**
**West Hill**
**Scarborough Ontario M1E 3X2 (CA)**

(74) Representative : **Asquith, Anthony**
**Anthony Asquith & Co**
**328 Leeds Road**
**Scholes Leeds, LS15 4DD (GB)**

EP 0 507 784 B1

## Description

Areas of open and inland waters and shorelines are with increasing frequency being polluted by the spillage of oil. One major approach to alleviating this problem has been the development of apparatus and methods for preventing the spreading of spilled oil by confining it to the area near its discharge. This facilitates removal, by causing the oil to concentrate in thicker layers on the surface of the water. Containment of spilled oil employs commercially available floating booms such as exemplified in the oil collection boom of U.S. patent No. 3,679,058 (Smith) or sorbent barriers such as that described in United States patent No. 3,739,913 (Bogosian).

Such containment techniques are not fully effective, as water currents, waves and wind conditions often lead to the escape from the containment region of oil which forms an outwardly spreading film that diminishes from a few millimeters down to fractions of a micron (0.001 mm) in thickness as it moves towards the shoreline, where it can present a serious ecological threat to sensitive areas, such as fish-hatcheries, wildlife preserves, harbours and beaches.

A number of sorbent materials have been proposed or made commercially available for the purpose of picking up oil which has escaped from containment booms and for protecting shorelines. These range from natural products, such as straw or sawdust, to synthetics such as polypropylene or polyurethane foam, or relatively thick (5 mm or greater) mats, sheets or rolls of melt-spun and fabric-stitched oleophilic polymers. Examples of the latter include 3M™ Type 156 pads and ALSORB™ sheets or rolls.

Fibrous synthetic sorbent sheets of the kind presently in use have high sorption capacities, but tend to be considerably more expensive than natural or inorganic products. Their utilization has been restricted to smaller spills in sheltered waters or to recover oil whose access by skimmers or other mechanical means is difficult, such as under docks etc. They can as well be of value for use and re-use to pick up oil within containment areas, where the high thickness of oil enables economical use of their full capacity. Re-useability of such materials, by squeezing oil from the porous interior, is stated to be a major advantage. As a practical matter, however, reusability may be an economic necessity because of the price of such materials. Further, reusability requires apparatus and facilities for extracting and collecting the oil from the used sorbent.

Known oil sorbent materials have not adequately met the need for a relatively inexpensive sorbent which exhibits a high pick-up ratio for oil, which can be conveniently stored in quantity in a relatively small space, and which can be readily deployed onto sensitive areas to protect them against approaching oil slicks. The minimum thickness of conventional synthetic sorbent materials in the form of sheets or rolls of non-woven polymer fibres is around 5mm, which imposes a limit on the quantity of such sorbent which can be stored in a given space. As discussed in greater detail below, it is desirable that there be available for use considerably thinner sorbent materials which nevertheless exhibit an adequate affinity for oil, measured by the pickup ratio, to make it practical to keep substantial amounts of sorbent in storage at the ready for use in the event of an emergency. A principal desirable property not exhibited by presently available sorbents is the combination of a high storage density with a sufficiently high pick-up ratio. By "pick-up ratio" is meant the mass of oil which adheres to a given dry mass of sorbent, in use, symbolized hereinafter as $m_o/m_s$.

Moreover, particularly on application to very thin water-borne oil films, sorbents in the form of mats or pads of synthetic fibre are subject to varying degrees of undesirable water pickup as a portion of these thicker materials rides below the oil surface and in the water.

It has been discovered that relatively thin flexible sheets of oleophilic, hydrophobic substrates such as polyethylene film may be used as the basis for effective and commercially advantageous sorbent media, particularly for deployment on sensitive areas as a first line of defence against approaching oil slicks, but also, in particular embodiments of the invention, for early assistance in the containment of oil at or near the source of a spill. Such sorbent media are sufficiently inexpensive that disposal of the oil-charged medium after use, as by incineration, is economically practical, by contrast with the more expensive synthetic sorbent media currently available. However, the sorbent media according to the invention may alternatively be re-used following extraction of absorbed and adsorbed oil. Too, having no fibrous structure and being made of thin buoyant material, sorbent media according to the present invention are inherently free of water pickup.

The underlying principle of my novel sorbent media is that the degree of sorption of oil on an oleophilic surface is a function of the surface area and configuration of such media. Use of the thinnest substrate allowing sufficient mechanical strength results in the greatest value of $m_o/m_s$, and hence economy, for such a sorbent medium. This is fundamentally different from the fibrous web-type sorbents which, in many applications, have a substantial unused capacity for oil, as illustrated below.

BRIEF SUMMARY OF THE INVENTION

It is an object of the invention to provide sorbent media which can be stored in quantity in a relatively small storage space for ready deployment over a given area of oil-contaminated water surface, or a given area of shoreline water or land area to be protected from encroaching water-borne oil spills, and which will substantially reduce the risk and extent of contamination of such areas. In particular, it is an object to provide a film-form sorbent medium which can be stored on rolls at storage stations in sensitive areas and readily deployed by reeling off one or more layers of sorbent as needed for coverage.

It is a further object of the invention to provide sheet-like sorbent media having an oil-pickup capacity per unit area more closely matched to the thickness of surface oil to be removed, than prior known sheet-form oil sorbent media.

With a view to achieving these objects, the invention is in one aspect a thin, sheet-like sorbent material for collecting contaminating oil from the surface of open water and for protecting shoreline water or land areas from approaching oil slicks by extending at least one layer thereof onto the oil-contaminated water surface or area to be protected, comprising a flexible film of material, at least one of whose two principal surfaces is oleophilic and hydrophobic.

In other embodiments, there is provided a thin, sheet-like sorbent material comprising a pair of oleophilic, hydrophobic films joined together along sealing seams defining interior pockets having apertures therethrough to admit migration of contaminating oil into the pockets, or a pair of oleophilic hydrophobic films sealingly laminated together with at least one of said films having been embossed to form a plurality of cells, each such cell having apertures through opposite surfaces thereof to receive contaminating oil. Having an enhanced pick-up ratio by virtue of multiple oleophilic layers and oil-receiving pockets within their structure, such embodiments are adapted for use and deployment at or near the source of spillage (e.g. tankers and floating drill platforms), where oil thickness on the water is greater than on areas of open water remote from the spill.

## BRIEF DESCRIPTION OF THE DRAWINGS

The invention and other objects and advantages thereof will be more fully understood with reference to the following drawings in which:

Figure 1 is a schematic sectional view of a creased thin sorbent material according to one embodiment of the invention, illustrating the tendency of oil to collect at concave portions of an oleophilic, hydrophobic surface;

Figure 2 is a schematic sectional view as in Figure 1, illustrating the pattern of collection at concave surface portions for a higher viscosity oil than that illustrated in connection with Figure 1;

Figure 3 is a schematic drawing illustrating the deployment of a film-form sorbent according to any of the embodiments of the invention from a roll dispenser on a small boat to protect a sensitive area threatened by an approaching oil slick;

Figure 4 is a perspective view of a portion of a sorbent material according to one embodiment of the invention;

Figure 5 is a plan view of one of the formed pockets in the sorbent material of Figure 4;

Figure 6 is a sectional view along the line 6-6 of Figure 5;

Figure 7 is a schematic view of the pocket of sorbent material of Figure 5 following entrapment of oil in the pocket;

Figure 8 is a sectional view along the line 8-8 of Figure 7;

Figure 9 is a top perspective view of a double-film sorbent medium made according to a further embodiment of the invention;

Figure 10 is a cross-sectional view of the sorbent medium embodiment of Figure 9; and

Figure 11 is a perspective view of a portion of a sheet of sorbent material according to a further embodiment the invention.

## DESCRIPTION OF THE PREFERRED EMBODIMENTS

In the embodiments of this invention, there will be disclosed several arrangements for film-based, sheet-like sorbent materials according to the invention and their measured essential properties, compared with a prior art sorbent, namely 3M Type 151 and Type 156 pads. These are, respectively, 3/16″ (0.5 cm) and 3/8″ (1 cm) thick fabric consisting of non-woven synthetic polyolefin fibres containing small voids throughout.

## EXPERIMENTAL PROCEDURE

A small specimen (about 5cm x 6cm) of each sorbent material tested, having a measured area equal to $A_s$ $cm^2$ was first weighed dry ($m_s$ grams) and was then (with the exception of specimen $S_o$) laid on one face on the surface of a bath of 10W40 motor oil (density = 0.88 gm/cm$^3$) and allowed to float on the oil until it was seen that the top surface of the specimen was completely covered by oil. Specimen $S_o$, being an unperforated integral film, total immersion in oil was required, as there are no through-film passages for migration of oil between the principal surfaces for this particular specimen.

The specimen was then removed by one corner or end and allowed to hang until dripping stopped, then weighed to give the combined weight of oil pick-up plus sorbent weight, $(m_o+m_s)$ g. For each specimen, the following parameters were then calculated:

i) the aforementioned oil pick-up ratio $m_o/m_s$, which provides a dimensionless measure of the inherent affinity for oil of the sorbent tested;

ii) the ratio $A_s/m_s$ [cm$^2$/g], the surface area presented by a unit mass of dry sorbent material;

iii) the ratio $m_o/A_s$ [g/cm$^2$], the mass of oil taken up by unit area of dry sorbent material; and

iv) the quantity $(m_o/A_s)/0.088$ [mm]. This quantity referred to hereinafter as the "related oil thickness" characterizing the particular sorbent, is a measure of the maximum theoretical thickness of film of l0W40 oil (density = 0.88g/cm$^3$) which can be fully taken up by a sorbent sheet exposed to the oil film.

The experimental results are set out below in Table I, following which the various sorbent materials are identified and described. "S" refers to a sorbent material comprising a single film of material and "D" refers to a double-film sorbent material. Each data entry represents the average of three experimental measurements.

## TABLE I

| Sorbent | $m_o/m_s$ | $A_s/m_s$ | $m_o/A_s$ | "Related Oil thickness" $(m_o/A_s)/0.088$ |
|---|---|---|---|---|
| 3M Type 151 | 9.90 | 50.0cm²/g | 0.196g/cm² | 2.23 mm |
| 3M Type 156 | 8.10 | 26.0 | 0.312 | 3.54 |
| $S_o$ | 5.70 | 1,090 | $5.24 \times 10^{-3}$ | 0.059 |
| $S_1$ | 6.80 | 1,090 | $6.26 \times 10^{-3}$ | 0.071 |
| $S_2$ | 6.50 | 1,090 | $5.98 \times 10^{-3}$ | 0.067 |
| $S_3$ | 7.70 | 1,000 | $7.70 \times 10^{-3}$ | 0.087 |
| $D_1$ | 6.20 | 543 | $1.14 \times 10^{-3}$ | 0.129 |
| $D_2$ | 16.2 | 543 | $2.98 \times 10^{-3}$ | 0.338 |
| $D_3$ | 32.7 | 500 | $6.54 \times 10^{-3}$ | 0.743 |
| $D_4$ | 35.6 | 500 | $7.12 \times 10^{-3}$ | 0.809 |
| $D_5$ | 24.2 | 75.0 | 0.323 | 3.67 |
| $D_6$ | 16.4 | 147 | 0.060 | 1.061 |

$S_0$, $S_1$, $S_2$, and $S_3$ were specimens of flexible polyethylene film of a thickness of about .01mm (10 microns) and a density of about 0.92gm/cm³. $S_0$, unlike all other samples, was fully immersed in oil prior to effecting the experimental measurements, to provide a measure of the oil-pickup properties of polyethylene film not subjected to any deformation or breaks in its surface.

$S_1$ was made of the same material as $S_0$, but randomly pierced with a needle, with an average of about three pierces per cm² of sorbent surface. Sample $S_2$ also was provided with apertures through the film to permit the passage of oil, but in the form of 1cm slits, with an average of four such slits per cm² of surface. Oil penetrating from the bottom of floated samples $S_1$ and $S_2$ was seen to spread over and fully cover the top surface of each specimen.

Comparison of the pick-up ratios of $S_1$ and $S_2$, 6.80 and 6.50 respectively, with the value of 5.70 for the "untreated" polyethylene film substrate in repeated experiments suggests that pierces and slits not only serve to allow the passage of oil from one major surface through to and across the other major surface, but also that additional oil collects at the puncture or slit discontinuities in the film.

The effect of surface texture irregularities in enhancing the degree of sorption of oil is illustrated by the still higher value of $m_o/m_s$ = 7.70 for $S_3$, a polyethylene film slit like $S_2$ but also formed with "creases" made by holding the specimen in a twisted configuration for 48 hours at a tension less than that sufficient to induce any appreciable cold flowing of the plastic.

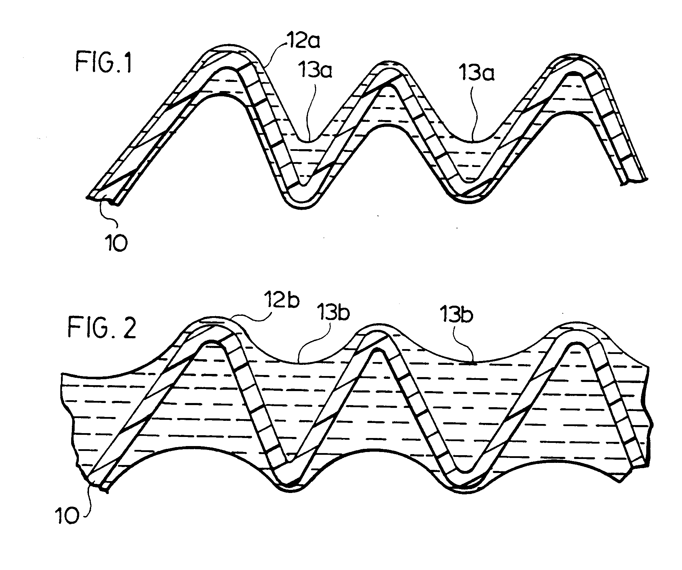

Figures 1 and 2 represent the pooling of oil at the concave surfaces in cross-sectional schematic views of such a creased film. A portion of a creased film such as $S_3$ is indicated at 10 in Figures 1 and 2. For simplicity of representation, the apertures through film 10 are not shown. Indicated at 12a in Figure 1 is the film-forming contour of a low-viscosity oil adsorbed to the surface of film 10. Indicated at 12b in Figure 2 is the thickness pattern of a higher-viscosity oil adsorbed to the surface of film 10. "bridging" zones of concave curvature where the adsorbed oil tends to collect in thicker pools are indicated at 13a in Figure 1 and at 13b in Figure 2. As noted above, the piercing of flat or creased films itself creates discontinuities. The annular concave surfaces around the pierced holes on one side of the film also act as bridging zones to augment the adherence of oil at such sites.

The practical advantages of a single-film substrate according to one embodiment of the invention may be seen by comparing the entries in Table I for sorbent S3 with those for 3M Type 151 (trademark) and considering the use of either to deal with an oil slick of thickness one micron (0.001mm). The "relative oil thickness" of the absorbent-pad 3M (trademark) material is more than 2,000 times as great as the oil slick, while that of the S3 is only about nine times as great. For a given area of sorbent material, the weight of 3M material is about 20 times that of S3, so that the economic advantage of employing the film-form material is apparent.

3M Type 156 (trademark) sorbent sheeting, which is twice as thick as Type 151, is available in standard rolls of 81.3 cm (32″) diameter and 91.4 cm (36″) width. Polyethylene film of the type used in specimens S0 to S3 is available in 25.4 cm (10″) diameter by 63.5 cm (25″) width standard rolls. By a straightforward geometric calculation it may be seen that one cubic meter of storage space will accommodate only about 90 sq m of the 3M sorbent and about 72,000 sq m of the film-form substrate, a storage density greater by a factor of about 800. This provides a clear advantage for the ready storage and deployment of the film-form sorbent. Thus, for example, a beachfront area could be provided with positioned roll dispensers to lay out one or more layers of sorbent according to the invention. With such a product, a 63.5 cm (25″) wide, 22.6 kg (50 lb) roll would cover approximately 2323 sq m (25,000 sq ft) of area. Upon notice of an approaching oil slick, a small boat or rubber raft could participate in protecting a sensitive area by reeling off a sorbent of the type S3 in front of the sensitive area, as a relatively inexpensive first line of defence.

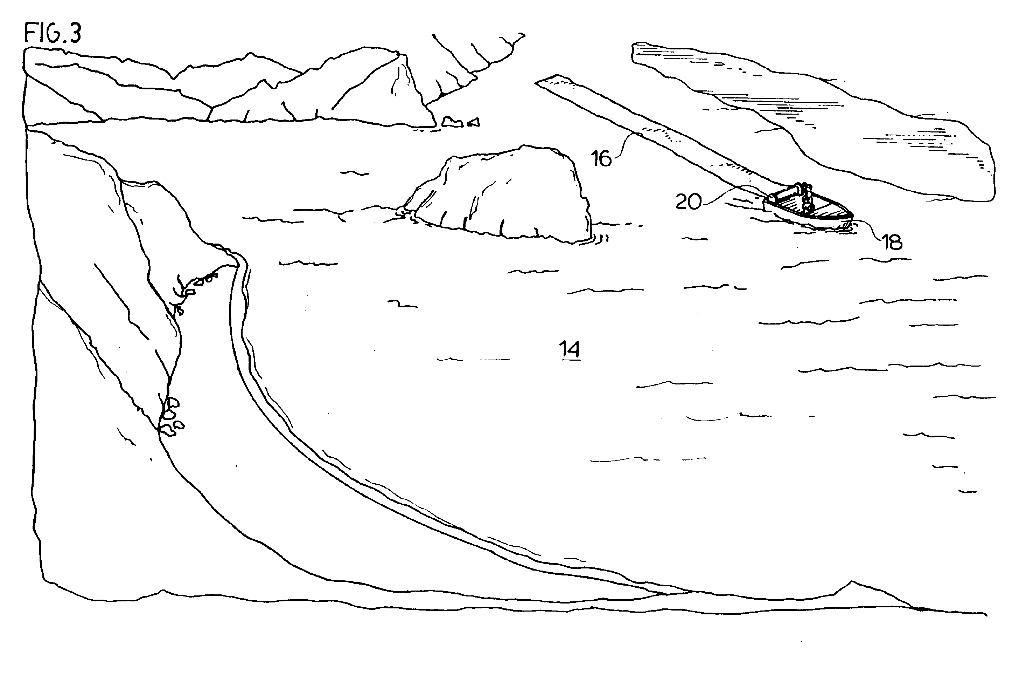

Figure 3 illustrates in schematic fashion the deployment in a sheltered cove of film-form sorbent material by a small two-man boat 18. The sorbent 16 can simply be reeled off a roll dispenser 20 in multiple rows as appropriate to the local topography and prevailing conditions.

The aforementioned high storage density (2323 sq m (25,000 sq.ft.) per "standard" roll) of film-form sorbents also makes it a practical application for such materials to be stored on oil tankers, floating oil rigs or other potential sources of oil spillage on open water for rapid deployment about or onto the spilling oil to reduce spreading at and near the source, i.e. for preliminary assistance in containment until a conventional boom-type containment system can be put in place.

Alternatively, rows of film-form sorbent according to the invention could be dispensed from payout means installed on a helicopter positioned over forming oil slicks, near such sources of spillage as floating oil rigs, and laid down from above the spill source.

It will be appreciated by those of ordinary skill in the art that any of a number of thin sheet-like sorbent materials having oleophilic and hydrophobic properties could be used to take advantage of the large value of m0/ms characterizing such materials. Examples S1 to S3 relate to films of oleophilic polymers such as polyethylene having a density less than that of water, to float on the surface of the oil-contaminated water. Other potential variations and their applications contemplated are as follows:

Paper treated on one side to have a oleophilic and hydrophobic upper surface could be used as a sorption substrate by application, for example, to a beach surface threatened with an approaching oil spill, with its oleophilic, hydrophobic surface facing upwardly and the hydrophilic paper surface at the bottom. The paper will then tend to absorb water in use when the substrate is exposed to oil-contaminated water washing onto shore, and the added weight of the substrate by absorption of water will tend to hold the sorbent in place during adsorption of oil by the oleophilic upper surface.

In a different class of embodiments of the invention two or more flexible oleophilic and hydrophobic films are joined together along portions of their facing principal surfaces to form separate pockets or domes, and suitable apertures are made through the films into the pockets to admit oil.

Specimens $D_1$ and $D_2$ were formed by layering two films of the same polyethylene as specimen $S_0$ together and heat sealing the films along perpendicular sealing seams to form a rectangular matrix of 40x50 mm pockets. In the case of $D_1$, several small slits were made on both sides of each such pocket, whereas in $D_2$, the only apertures into each pocket was a pair of offset circular near-central holes of diameter 3/16 through respective opposite surfaces of each pocket.

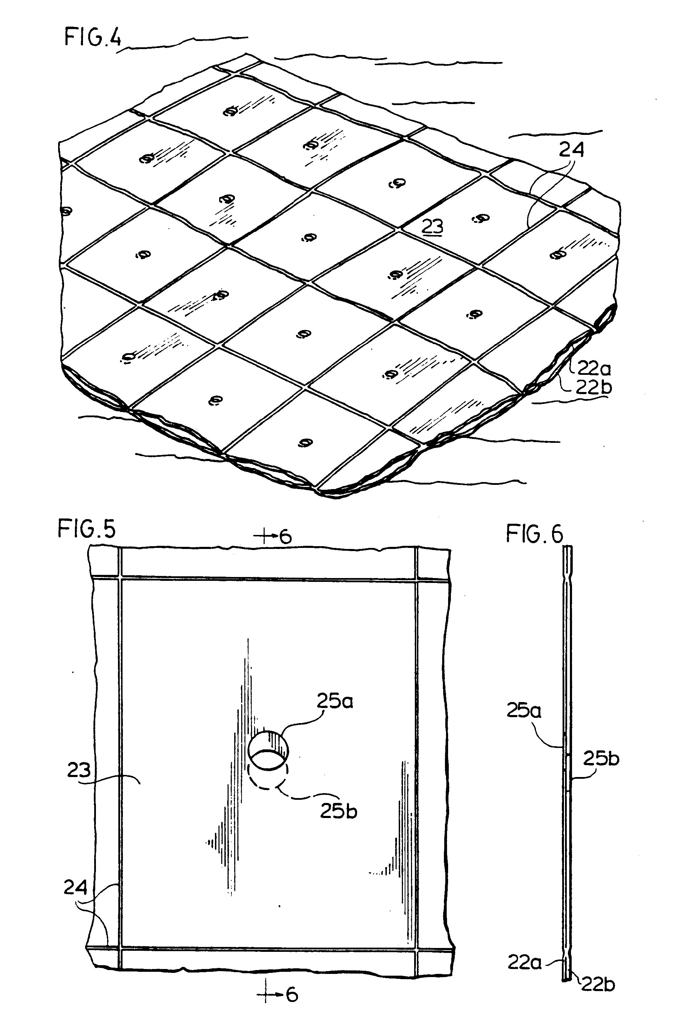

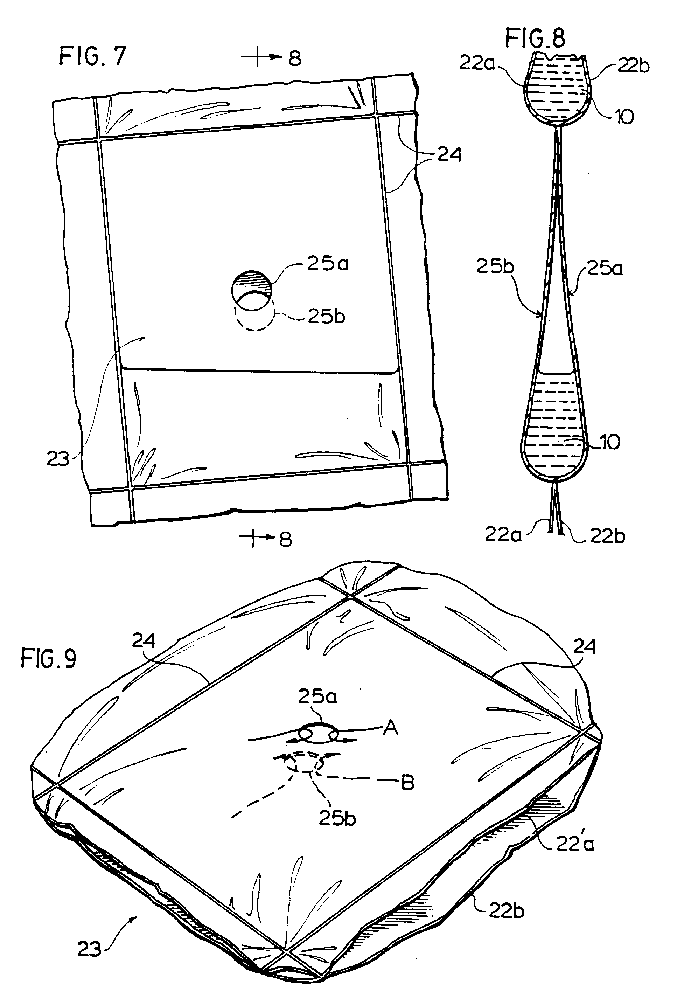

Specimen $D_2$ is illustrated in Figures 4 to 8. Figure 4 shows a perspective view of this sorbent material with the two polyethylene films 22a and 22b formed into a matrix of individual pockets such as 23 by sealing seams 24. One such pocket of a $D_2$ specimen is illustrated prior to use in Figures 5 and 6 and after pickup of oil 10 in Figures 7 and 8.

As best seen in Figure 5 and the cross-sectional view of Figure 6, pocket 23 has two offset central holes 25a and 25b through respective upper and lower film surfaces 22a and 22b.

It was observed that the average value of the oil pick-up ratio $m_o/m_s$ for $D_2$ (16.2) was about three times as great as the corresponding slit specimen $D_1$ (6.20). From visual observation, it appears that when specimen $D_2$ is laid on the oil surface the immediate contact of oil with the exposed portion of the interior surface of the upper film 25a and the olephilic interaction at that site facilitates the migration of oil along the interior film faces, where it is trapped in the pocket, as seen in Figure 7 and the sectional view of Figure 8. By having all pockets, centrally pierced, collected oil stays in the pockets below the aperture when the sorbent sheet is drawn from the treated area after use.

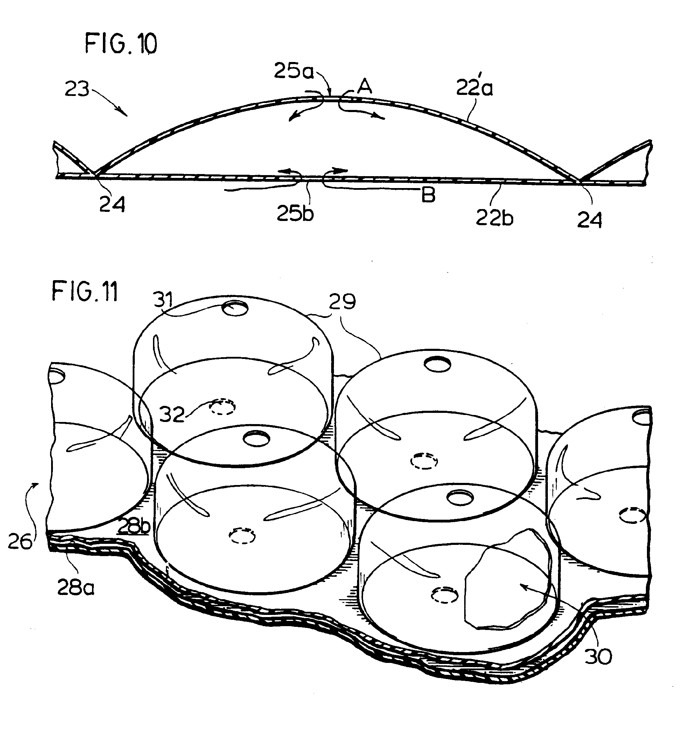

As illustrated in Figures 9 and 10, a further modification to the sorbent media $D_1$ or $D_2$ which has been seen to improve the oil-pickup ratio is achieved by forming the pockets 23 between the sealing seams 24 so that at least one of the two lateral film surfaces of each pocket is stretched or deformed away from the plane of the sorbent sheet so that it yields upon entry of oil into the pocket to form a "dome". In the perspective and sectional views of Figures 9 and 10, respectively, the dome-forming film is indicated as 22′a and the base-forming film as 22b. Where films 22′a and 22b are made of a polyolefin polymer having a density less than that of water, oil will tend to enter the pockets through offset central apertures 25a and 25b like those of the embodiment of Figures 4 to 8 and spread along the interior film surfaces, as illustrated by arrows A and B.

The dome-forming film 22′a can be made, for example, by creasing one film prior to joining the two films together along sealing seams. Specimens $D_3$ and $D_4$ are double-film layer sorbents of the same polyethylene material as $D_1$ and $D_2$ but in each of $D_3$ and $D_4$ one of the two component films was creased before fusing the films along seam lines into pockets. $D_3$ and $D_4$ differ from each other in that the apertures through the pocket faces are a plurality of small slits for $D_3$ and a central pair of offset holes in the case of D4. The average oil pick-up ratio for D3 and D4 were seen to be 32.7 and 35.6, respectively.

Comparison of specimen D2 and the "doming" specimens D4 with specimens S0 to S3 indicate that the use of a double layer of film with suitable formation of pockets and apertures gives rise to an oil retention which is more than double that of the single layer films of like materials.

The "related oil thickness" for the single film embodiments tested ranges from about 0.05 to 0.09 mm and for the double film from about 0.1 to about 0.8mm, still much less than the 2.23mm of the 3M Type 151 sorbent, but affording a useful and economical substrate for dealing with heavier oil films, particularly on shoreline waters where greater physical rigidity of sorbents is required.

Increasing the interior of volume capacity of pockets in the double-film sorbent for oil can be achieved not only by forming at least one of the films to dome outwardly in use, but alternatively by forming two flat, specular oleophilic hydrophobic films into pockets containing a small amount of granular or fibrous "spacing" material within each of the pockets to maintain separation of the films across the inner pocket faces and facilitate migration of oil into the pockets through apertures in the constituent films.

Advantageously the aforementioned granular or fibrous spacing material may include any of a number of known substances active in the degradation of oil, such as INOPOL EPA 22 (trademark) produced by Elf Aquitane, oil-decomposing bacteria, etc. and enzymes which actively promote the degradation by bacteria already present of contaminants such as dioxins.

A further method of preparing sheet-like sorbent materials according to the invention is to form a "cellular" material of two oleophilic and hydrophobic films and provide central apertures through opposite faces of each cell, to admit and capture oil.

Air-cellular cushioning material such as Induspak CELLUL AIR (trademark) and Sealed Air of Canada Ltd.'s POLYCAP (trademark) bubble sheets are typically made of flexible plastics having the requisite oleophilic hydrophobic characteristics essential to oil sorbency.

Specimens D5 and D6 were samples of the CELLUL AIR material have 2.9 cm (1-1/8″) and 0.95 cm (3/8″) diameter bubbles, respectively, which were centrally pierced through each bubble and its subtending backing film. Figure 11 illustrates in perspective view at a portion of material 26 of the kind exemplified by specimens D5 or D6, comprising a flat film layer 28a sealed to an embossed film layer 28b presenting a number of embossed portions 29 and associated cavity-forming regions 30. Central holes 31 and 32 are provided through the top surface of embossed portion 28b and the underlying portion of film layer 28a, respectively. When these materials were placed in oil in the course of the above-described experimental testing, it was observed that oil tended to enter and restore the shape of the pierced bubbles even when these were physically collapsed prior to placement of the specimen in oil. Sheets of such materials, preparatory to use, can therefore be stored in rolls with the bubbles partially or nearly completely collapsed, so that a high storage density relative to conventional fibre mat sorbents is still achieved.

Smaller values of As/ms for these materials compared with specimens D1 to D4 is reflective of the greater film thickness and areal density of the plastic used in the air-cellular cushioning material which is intended to impart packing strength. Specifically, the bubble-form film of Specimen D5 was of thickness 0.02 mm and the backing (unembossed) film was of thickness 0.045 mm. For a given area of sorbent material, the weight of D5 is about 13 times that of S3, but the "related oil thickness" is 42 times as great. Thus for thicker oil films the "cellular" sorbent medium is to be preferred. Fabrication of such materials with thinner film than used in commercial bubble sheet packing would be expected to lower the weight per unit of substrate without substantially lowering its oil pick-up capacity.

As seen from Table I, the "related oil thickness" of specimen D5, 3.67 mm, is comparable to that of the 3M Type 156 sorbent and corresponds to the thickness of oil on water very near to the source of a substantial spill or from a tanker or floating oil rig. Taken with the higher storage density of such material compared to bulky fibre-sheets or rolls, rolls of the double-film sorbent substrates having pierced cells therein, according to this last-discussed specific embodiment of the invention, are particularly adapted for storage on potential sources of oil spills, from which they could immediately be deployed about or onto spilling oil in the event of a mishap pending arrival or setting up of conventional boom containment arrangements, to serve as a useful first line of prevention near or at the source of the oil spill.

The invention is distinguished from USA patent publication no. US 4049554 (Ayers, 1977) in that the oil is adsorbed into a thin flexible sheet, at least one principal surface of which is oleophilic and hydrophobic. Also, French patent publications FR-A-1534735 was considered relevant to the invention.

## Claims

1. Apparatus for collecting oil from oil-contaminated water or land areas, characterised by the following structural combination:
   the apparatus includes at least one film or sheet of sorbent material; the film is thin and flexible;
   the film is suitable for being extended onto the oil-contaminated water surface or area to be protected;
   at least one of the two principal surfaces of the film is oleophilic and hydrophobic;
   the film includes many apertures therethrough;
   and the apertures in the film are suitable for admitting the passage of oil from one to the other of the said two principal surfaces.

2. Apparatus of claim 1, further characterised in that:
   the flexible film is paper;
   and the paper is coated on one side thereof with an oleophilic and hydrophobic finish.

3. Apparatus of claim 1, further characterised in that:
   the sorbent material has a specific gravity less than that of water;
   whereby, when applied to the surface of the oil-contaminated open water, the sorbent material remains afloat before and after sorption of oil to its full capacity.

4. Apparatus of claim 3, further characterised in that:
   the oleophilic and hydrophobic surface, when laterally extended in use, presents texture irregularities;
   and the irregularites are suitable for enhancing the degree of sorption of oil onto the surface.

5. Apparatus of claim 1, further characterised in that the apertures are formed by making many small pierces through the flexible film.

6. Apparatus of claim 1, further characterised in that the apertures are formed by making many small slits through the flexible film.

7. Apparatus of claim 1, further characterised in that the flexible film is composed essentially of an olefinic polymer.

8. Apparatus of claim 1, further characterised in that the flexible film is composed essentially of polyethylene.

9. Apparatus of claim 1, further characterised in that:
the apparatus includes a second film;
the said at least one film and the second film are disposed together in an adjacent surface-to-surface relationship;
and the second film is of thin, flexible, material.

10. Apparatus of claim 9, further characterised in that:
the two films are joined together along sealing seams which define interior pockets;
and the apertures in the film are so disposed and arranged in relation to the pockets as to be suitable for admitting the migration therethrough of contaminating oil into the pockets.

11. Apparatus of claim 10, further characterised in that the second film is of oleophylic and hydrophobic material.

12. Apparatus of claim 10, further characterised in that the second film includes many apertures therethrough, which are suitable for admitting the migration therethrough of contaminating oil into the pockets.

13. Apparatus of claim 10, further characterised in that:
the apparatus includes, within each pocket, a small amount of granular or fibrous material;
the nature of the amount of granular or fibrous material is such as to maintain separation of the two films across the pockets;
whereby the amount of material facilitates migration of oil into the pockets and along the interior surfaces thereof.

14. Apparatus of claim 13, further characterised in that the granular or fibrous material has oil-degrading properties.

15. Apparatus of claim 10, further characterised in that:
at least one of the films has been stretched or deformed away from the plane of the film, to the point that the material yields;
whereby the deformations induced in the film serve to maintain separation of the two films across the pocket, thereby increasing the interior volume capacity of the pockets for oil.

16. Apparatus of claim 15, further characterised in that:
the induced deformation of the film was effected by creasing the film, along the sealing seams, before the films were joined together;
whereby the film tends to form a convex dome on each pocket as oil enters the pocket.

17. Apparatus of claim 12, wherein the apertures in one film are offset with respect to the apertures in the other film.

18. Apparatus of claim 12, further characterised in that:
at least one of the films has been stretched or deformed to the extent that the pockets form bubbles;
each bubble has apertures through opposite surfaces thereof, whereby the bubble is collapsible;
the arrangement of the apparatus is such that, when the apparatus is deployed on oil-contaminated water with the bubbles collapsed the contaminating oil enters the bubbles;
whereby the bubbles dilate to increase the interior volume capacity of the apparatus for oil.


**Patentansprüche**

1. Vorrichtung zum Entfernen von Öl aus mit Öl verschmutztem Wasser oder Boden, die folgende strukturelle Kombination aufweist:
die Vorrichtung umfaßt zumindest einen Film oder ein Blatt Sorptionsmittel;
der Film ist dünn und elastisch;
der Film eignet sich zum Ausbreiten auf eine mit Öl verschmutzte Wasseroberfläche oder einen zu schützenden Bereich;
zumindest eine der beiden Hauptoberflächen des Films ist ölanziehend und wasserabstoßend;
der Film ist mit zahlreichen Öffnungen versehen;

und Öl kann durch die Öffnungen im Film von einer der besagten zwei Hauptoberflächen zur anderen dringen.

2. Die in Patentanspruch 1 beschriebene Vorrichtung einschließlich der folgenden Merkmale:
   der elastische Film besteht aus Papier;
   und das Papier ist auf einer Seite mit einer ölanziehenden und wasserabstoßenden Schicht überzogen.

3. Die in Patentanspruch 1 beschriebene Vorrichtung einschließlich der folgenden Merkmale:
   das Sorptionsmittel weist ein geringeres spezifisches Gewicht als Wasser auf;
   wobei das Sorptionsmittel vor und nach der Sorption von Öl bis zur Erreichung der vollen Aufnahmefähigkeit auf dem Wasser schwimmt, wenn es auf die Oberfläche des mit Öl verschmutzten Wassers aufgetragen wird.

4. Die in Patentanspruch 3 beschriebene Vorrichtung einschließlich der folgenden Merkmale:
   die ölanziehende und wasserabstoßende Oberfläche weist eine unregelmäßige Struktur auf, wenn sie bei der Verwendung seitlich ausgedehnt wird;
   und die unregelmäßige Struktur erhöht die Sorption des Öls durch die Oberfläche.

5. Die in Patentanspruch 1 beschriebene Vorrichtung, die ferner dadurch gekennzeichnet ist, daß die Öffnungen durch Durchstechen des elastischen Films an zahlreichen Stellen gebildet werden.

6. Die in Patentanspruch 1 beschriebene Vorrichtung, die ferner dadurch gekennzeichnet ist, daß die Öffnungen durch geringfügiges Aufschlitzen des elastischen Films an zahlreichen Stellen gebildet werden.

7. Die in Patentanspruch 1 beschriebene Vorrichtung, die ferner dadurch gekennzeichnet ist, daß der elastische Film im wesentlichen aus einem Olefinpolymer besteht.

8. Die in Patentanspruch 1 beschriebene Vorrichtung, die ferner dadurch gekennzeichnet ist, daß der elastische Film im wesentlichen aus Polyethylen besteht.

9. Die in Patentanspruch 1 beschriebene Vorrichtung einschließlich der folgenden Merkmale:
   die Vorrichtung umfaßt einen zweiten Film;
   der zumindest eine besagte Film und der zweite Film sind so angeordnet, daß ihre Oberflächen nebeneinander liegen;
   und der Film besteht aus einem dünnen elastischen Material.

10. Die in Patentanspruch 9 beschriebene Vorrichtung einschließlich der folgenden Merkmale:
    die beiden Filme sind durch Dichtungsfalze miteinander verbunden, die innere Taschen bilden;
    und die Öffnungen im Film sind so in Relation zu den Taschen angeordnet, daß das Schmutzöl durch die Öffnungen in die Taschen dringen kann.

11. Die in Patentanspruch 10 beschriebene Vorrichtung, die ferner dadurch gekennzeichnet ist, daß der zweite Film aus ölanziehendem und wasserabstoßendem Material besteht.

12. Die in Patentanspruch 10 beschriebene Vorrichtung, die ferner dadurch gekennzeichnet ist, daß der zweite Film mit zahlreichen Öffnungen versehen ist, durch die das Schmutzöl in die Taschen dringen kann.

13. Die in Patentanspruch 10 beschriebene Vorrichtung einschließlich der folgenden Merkmale:
    die Vorrichtung enthält in jeder Tasche eine geringe Menge körniges oder faseriges Material;
    die Taschen weisen eine derartige Menge körniges oder faseriges Material auf, daß die beiden Filme in den Taschen getrennt bleiben;
    wobei durch die Materialmenge gewährleistet ist, daß das Öl in die Taschen dringen und die Innenfläche entlangfließen kann.

14. Die in Patentanspruch 13 beschriebene Vorrichtung, die ferner dadurch gekennzeichnet ist, daß das körnige oder faserige Material ölabbauende Eigenschaften aufweist.

15. Die in Patentanspruch 10 beschriebene Vorrichtung einschließlich der folgenden Merkmale:
    zumindest einer der Filme wurde bis zur maximalen Streckgrenze von der Filmfläche weggezogen oder weggebogen;

wobei die im Film hervorgerufenen Verformungen dazu dienen, die beiden Filme in der ganzen Tasche voneinander getrennt zu halten, wodurch die Ölaufnahmekapazität der Taschen erhöht wird.

16. Die in Patentanspruch 15 beschriebene Vorrichtung einschließlich der folgenden Merkmale:
die im Film hervorgerufene Verformung wurde durch Falten des Films entlang den Dichtungsfalzen vor dem Zusammenfügen der Filme erzielt;
wobei der Film auf jeder Tasche eine konvexe Kuppel bildet, wenn Öl in die Tasche eindringt.

17. Die in Patentanspruch 12 beschriebene Vorrichtung, wobei die Öffnungen in einem Film im Verhältnis zu den Öffnungen im anderen Film versetzt sind.

18. Die in Patentanspruch 12 beschriebene Vorrichtung einschließlich der folgenden Merkmale:
zumindest einer der Filme wurde so ausgedehnt oder verformt, daß die Taschen Blasen bilden;
jede Blase weist Öffnungen in gegenüberliegenden Oberflächen auf, wodurch die Blase zusammenfallen kann;
die Vorrichtung ist so angeordnet, daß das Schmutzöl in die Blasen eindringt, wenn die Vorrichtung mit zusammengeklappten Blasen auf einer mit Öl verschmutzten Wasseroberfläche eingesetzt wird;
wobei sich die Blasen ausdehnen, um das Volumen der Vorrichtung zur Aufnahme von Öl zu erhöhen.


## Revendications

1. Un appareil pour recouvrer du pétrole sur des nappes d'eau ou sur des étendues de terrain contaminés par ce pétrole,
caractérisé par la combinaison structurelle suivante:
cet appareil comprend au moins un film ou une feuille fait d'un matériau sorbant;
ce film est mince et flexible;
ce film peut être placé sur une nappe d'eau ou sur une étendue de façon à recouvrir la nappe contaminée par le pétrole, ou le terrain à protéger;
l'une au moins des deux surfaces principales de ce film est oléophile et hydrophobe;
ce film est traversé par plusieurs ouvertures;
et ces ouvertures pratiquées dans le film permettent le passage du pétrole de l'une à l'autre de ces deux surfaces principales.

2. Un appareil suivant la revendication 1,
caractérisé également en ce que le film flexible est du papier;
et que ce papier est enduit sur l'une de ses surfaces d'un apprêt oléophile et hydrophobe;

3. Un appareil suivant la revendication 1,
caractérisé, de plus, en ce que la densité du matériau sorbant est inférieure à celle du l'eau de sorte que si l'on pose ce matériau sur la surface d'une nappe d'eau ouverte contaminée par le pétrole, le matériau sorbant flotte à la surface avant la sorption, et aussi après avoir sorbé une quantité de pétrole correspondant à sa capacité maximale.

4. Un appareil selon la revendication 3, caractérisé, de plus, en ce que:
le film oléophile et hydrophobe, lorsqu'il est étendu dans la direction latérale pendant son emploi, montre des irrégularités; et ces irrégularities favorisent une amélioration du degré de sorption du pétrole à sa surface.

5. Un appareil selon la revendication 1, caractérisé, de plus, en ce qu'on pratique les dites ouvertures par de petits coups de poinçon dans le film flexible.

6. Un appareil selon la revendication 1 caractérisé, de plus, en ce qu'on pratique les dites ouvertures en faisant de nombreuses petites fentes dans le film flexible.

7. Un appareil selon la revendication 1, caractérisé, de plus, en ce que le film flexible est formé, pour l'essentiel, d'un polymère oléfine.

8. Un appareil selon la revendication 1, caractérisé, de plus, en ce que le film flexible est fomé, pour l'essentiel, de polyéthylène.

9. Un appareil selon la revendication 1, encore caractérisé en ce que cet appareil comprend un second film; le dit "au moins un film" et le dit second film sont placés ensemble en position adjacente, surface contre surface; et le second film est fait d'un matériau mince et flexible.

10. Un appareil selon la revendication 9, encore caractérisé en ce que:
Les deux films sont joints de long de lignes de soudure qui forment des poches intérieures;
et en ce que les ouvertures pratiquées dans le film sont arrangées de telle manière qu'elles permettent la migration du pétrole à travers elles et jusque dans les dites poches.

11. Un appareil selon la revendication 10, characterisé, de plus, en ce que le second film est fait d'un matériau oleophile et hydrophobe.

12. Un appareil selon la revendication 10, encore caractérisé en ce que le dit second film est traversé par de nombreuses ouvertures, à travers lesquelles le pétrole peut migrer jusque dans les dites poches.

13. Un appareil selon la revendication 10, caractérisé, de plus, en ce que:
cet appareil comprend, dans chacune de ses poches, une petite quantité d'un matériau fibreux ou granulaire capable de maintenir les deux films séparés l'un de l'autre tout le long des poches;
de sorte que la nature de cette quantité du dit matériau facilite la migration du pétrole dans ces poches et le long de leurs surfaces intérieures.

14. Un appareil selon la revendication 13, caractérisé, de plus, en ce que le matériau granulaire ou fibreux possède des propriétés aidant à la dégradation du pétrole.

15. Un appareil selon la revendication 10, caractérisé, de plus, en ce que:
l'un des deux films au moins a été étiré ou déformé hors de son plan, jusqu'au point où le matériau cède;
au moyen de quoi des déformations provoquées dans le film servent à maintenir la séparation des deux films à travers la poche, ce qui accroit la capacité du volume intérieur des poches recevant le pétrole.

16. An appareil selon la revendication 15, caractérisé, de plus, en ce que :
la déformation provoquée dans le film est effectuée en plissant ce film le long des lignes de soudure, avant de joindre les deux films;
au moyen de quoi le film a tendance à former un dôme convexe sur chaque poche, lorsque le pétrole entre dans cette poche.

17. Un appareil selon la revendication 12, dans lequel les ouvertures de l'un des deux films sont décalées par rapport aux ouvertures de l'autre film.

18. Un appareil selon la revendication 12, caractérisé en ce que:
l'un des films au moins a été étiré ou déformé jusqu'au point où les poches forment des cloques;
chaque cloque présente des ouvertures dans ses surfaces opposées, ce qui permet à la cloque de s'aplatir;
l'arrangement de l'appareil est tel que, lorsque ce dernier est déployé sur une nappe d'eau contaminée par le pétrole, ses cloques étant aplaties, le pétrole de contamination entre dans ces cloques;
au moyen de quoi les dites cloques se dilatent, ce qui augmente la capacité de volume de l'appareil pour le recouvrement du pétrole.

FIG.1

12a
13a
13a
10

FIG. 2

12b  13b  13b
10

FIG.3

16

20

18

14

14

EP 0 507 784 B1

FIG.4

24

23

22a
22b

FIG.5

6

25a

23

25b

24

6

FIG.6

25a

25b

22a

22b

FIG. 7

FIG.8

FIG.10

FIG.11